# DEMANDE DE BREVET EUROPEEN

(11) **EP 3 156 204 A1**
(43) Date de publication de la demande: **19.04.2017**
(21) Numéro de dépôt: 16193564.8
(22) Date de dépôt: 12.10.2016
(51) Int. Cl.: B29C 45/76, B29C 45/14, B29C 70/68, B29C 33/12

(54) **CONTRÔLE ACOUSTIQUE D'UN PROCÉDÉ DE SURMOULAGE**

(30) Priorité: 13.10.2015 FR 1559720
(71) Demandeur: COMPAGNIE PLASTIC OMNIUM, 69007 Lyon (FR)
(72) Inventeur: GRANDO, Jérôme, 38390 VERTRIEU (FR); STABLO, Frédéric, 38390 PORCIEU AMBLAGNIEU (FR); TORRES, Olivier, 69230 SAINT-GENIS LAVAL (FR)
(74) Mandataire: Andrieux, Benoît

(57) **Abrégé**

L'ensemble (100) comprenant un moule (112) de surmoulage et un système (114) pour contrôler la structure d'un insert (116) lors d'une opération de surmoulage de l'insert (116). Le système (114) comporte au moins un moyen de détection d'ondes acoustiques (115) émises par l'insert (116) et un moyen de couplage (124) entre le moyen de détection (115) et l'insert (116). Le système (114) est positionné à l'extérieur du moule (112).

## Description

L'invention concerne le surmoulage des inserts en matériaux polymères ou composites, notamment dans le cadre de la fabrication de pièces structurelles pour des véhicules automobiles.

Le surmoulage d'un insert est une technique couramment employée consistant généralement à introduire l'insert dans un moule, puis à refermer le moule pour procéder à l'injection de la matière de surmoulage.

La matière de surmoulage est introduite dans le moule au contact de l'insert. Puis après moulage par injection ou compression, la matière surmoulée refroidit et se solidifie en se liant ainsi à l'insert. En raison des variations de la pression et des changements de température nécessaires à la mise en oeuvre de la matière, et affectant aussi l'insert, ce dernier subit des contraintes mécaniques importantes durant le surmoulage. En outre, si l'insert subit de plus la pression du moule lorsque celui-ci se referme sur l'insert cela provoque également un champ de contraintes supplémentaire dans des zones localisées de l'insert.

Habituellement, on contrôle, à l'issue du procédé de surmoulage, que l'insert n'est pas endommagé. Il est alors nécessaire d'extraire l'insert surmoulé du moule et de procéder à une étape de contrôle, éventuellement non destructif, par exemple par simple contrôle visuel de l'insert surmoulé, au moyen d'un test mécanique, ou alors au moyen de procédés basés sur les ultra-sons. Parfois, l'endommagement peut être imperceptible, ou alors inaccessible car noyé dans le surmoulage, et ne sera détecté par un utilisateur que bien plus tard à partir de la mise en service de l'insert surmoulé. Ainsi, si l'insert est endommagé au cours d'une des étapes du procédé de surmoulage, préhension de l'insert, pose dans le moule, fermeture du moule, injection ou compression, ouverture du moule, éjection, cet endommagement ne sera détecté qu'a posteriori. Comme l'insert est entouré de matière de surmoulage chaud dont les conditions de pression et de température varient de façon importante, on ne peut actuellement contrôler l'état structurel de l'insert durant le procédé de surmoulage dans des conditions de production industrielle.

Un objectif de l'invention est de fournir un système permettant de contrôler la structure d'un insert tout au long du procédé de surmoulage dans des conditions de production à l'échelle industrielle.

Pour ce faire, on prévoit selon l'invention un ensemble comprenant un moule de surmoulage et un système pour contrôler la structure d'un insert lors d'une opération de surmoulage de l'insert. Le système comporte au moins un moyen de détection d'ondes acoustiques émises par l'insert et un moyen de couplage entre le moyen de détection et l'insert, le système étant positionné à l'extérieur du moule.

Ainsi, on détecte les ondes acoustiques émises par l'insert et l'on peut donc suivre son état structurel en continu pendant tout le procédé de surmoulage. Comme le système est positionné en dehors du moule, on peut détecter avec précision, et après traitement du signal reçu, les ondes acoustiques émises par l'insert et lui seul sans que cette détection ne soit polluée par l'injection de la matière de surmoulage puis son refroidissement.

De préférence, le système comprend au moins deux moyens de détection d'ondes acoustiques.

L'analyse des données acoustiques est alors plus complète.

Selon un mode de réalisation, le moyen de détection d'ondes acoustiques est un capteur électro-acoustique, par exemple de type piézo-électrique.

Il s'agit d'un moyen de détection d'ondes acoustiques fiable, facile à utiliser et peu couteux.

Avantageusement, le moyen de couplage comprend au moins une membrane d'interface entre le capteur et l'insert.

Ici, on entend par moyen de couplage l'ensemble des moyens nécessaires au maintien du capteur sur l'insert et à la transmission des ondes acoustiques de l'insert vers le capteur.

La transmission des données acoustiques entre l'insert et le capteur est ainsi facilitée.

Selon un mode de réalisation, le moyen de couplage comprend au moins une couche de colle.

Le capteur est ainsi solidement relié à l'insert et la couche de colle permet également de transmettre les ondes acoustiques émises par l'insert.

De préférence, la membrane de couplage comprend un matériau souple ou un gel. Le contact entre le moyen de détection et l'insert est alors de bonne qualité.

Avantageusement, le système comprend des moyens de filtrage et d'analyse des ondes acoustiques émises par l'insert, les moyens étant aptes à corréler les ondes acoustiques à au moins une donnée relative à la structure mécanique de l'insert.

On peut ainsi détecter immédiatement un éventuel endommagement de l'insert.

De préférence, l'ensemble comprend un moyen de préhension de l'insert.

Le moyen de préhension remplit donc deux fonctions de manipulation de l'insert et d'intégration des capteurs, ce qui permet de diminuer l'encombrement, le coût, la complexité de l'ensemble.

On prévoit également selon l'invention un procédé de surmoulage d'un insert, mis en oeuvre au moyen d'un ensemble tel que précédemment décrit.

Selon un mode de réalisation préférentiel, le procédé comporte au moins une étape de contrôle de la structure de l'insert au moyen d'un système tel que précédemment décrit.

Selon un mode de réalisation, on acquiert des données acoustiques pendant que le moule est fermé.

Ainsi, pendant la mise sous contraintes (pression de moulage et/ou du moule) de l'insert, on peut contrôler qu'il ne s'endommage pas.

Avantageusement, on acquiert des données acoustiques pendant toute la durée du procédé de surmoulage.

On peut donc contrôler la structure de l'insert durant toute la durée du surmoulage.

De préférence, on arrête le procédé de surmoulage si l'on détecte un endommagement de l'insert.

On évite alors de poursuivre inutilement le procédé et l'on diminue ainsi son coût.

Selon un mode de réalisation, pendant la phase de mise au point de l'équipement et du procédé de surmoulage, on effectue au moins une acquisition de données acoustiques afin de déterminer un seuil de bruit, un endommagement de l'insert étant repéré lors du surmoulage si un bruit non conforme aux seuils d'acceptation prédéterminés est détecté.

Le traitement des données acoustiques est ainsi facilité.

On prévoit enfin selon l'invention un programme informatique comprenant des instructions de code apte à mettre en oeuvre un procédé tel que décrit ci-dessus.

On va maintenant décrire, à titre d'exemple non limitatif, un mode de réalisation de l'invention en se référant aux figures suivantes :
- la figure 1 est une vue de dessus d'un système pour contrôler la structure d'un insert selon l'invention et d'une partie du moule,
- la figure 2 est une vue de dessus d'un système pour contrôler la structure d'un insert selon l'invention, et
- la figure 3 est une vue en perspective d'une partie de la figure 1.

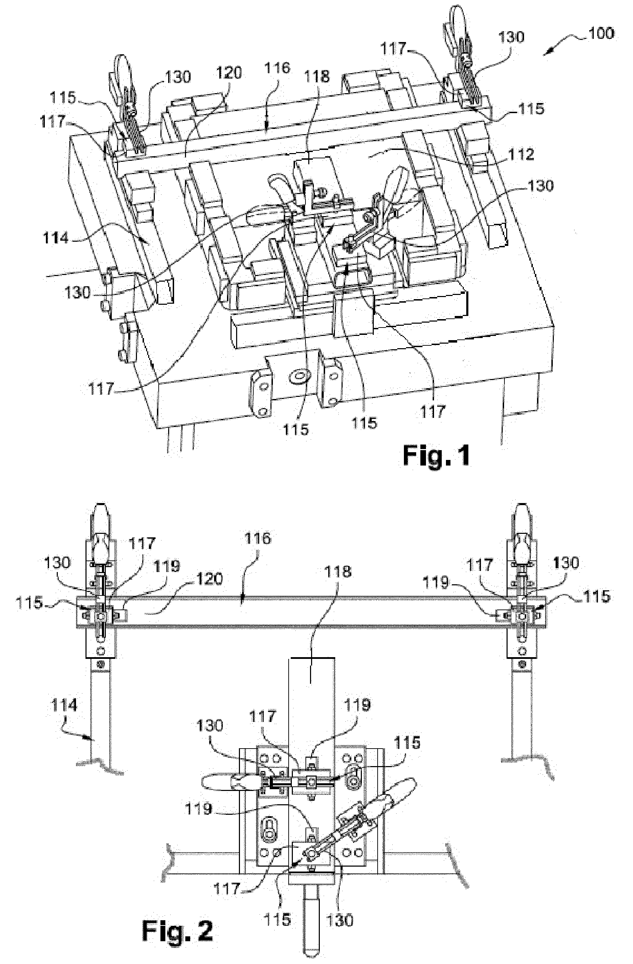

On se réfère maintenant à la figure 1, qui illustre un mode de réalisation d'un ensemble 100 selon l'invention. L'ensemble 100 comprend un moule 112 de surmoulage d'un insert 116 et un système 114 pour contrôler l'intégrité à coeur de l'insert 116 ou au niveau de l'interface de surmoulage, c'est-à-dire à la surface de contact entre l'insert 116 et la matière surmoulée. Le système 114 comporte au moins un moyen de détection d'ondes acoustiques 115 émises par l'insert 116 et un moyen de couplage 124 entre le moyen de détection 115 et l'insert 116. Le système 114 est positionné à l'extérieur du moule 112.

On a représenté sur les figures 1 à 3 un ensemble 100, selon un mode de réalisation de l'invention, comprenant un moule de surmoulage 112 (seule la partie inférieure étant représentée à des fins de clarté), et un système 114 apte à contrôler la structure d'un insert 116.

Le système 114 apte à contrôler la structure d'un insert 116 comprend :
- au moins un moyen de détection d'ondes acoustiques 115. Ce moyen 115 comprend :
   o au moins un capteur acoustique 119 ;
   o au moins un support 117 de capteur acoustique 119.
- au moins un moyen de couplage 124 d'un capteur 119 à l'insert 116
- un support spécifique dédié pour porter les moyens de détection d'ondes acoustiques 115. Selon des variantes, ce support peut être le moule 112 et/ou un préhenseur de l'insert.

Selon l'exemple de la figure 1, les moyens 115 sont portés par le préhenseur de l'insert 116. Ce préhenseur est destiné à supporter l'insert 116 pour permettre son positionnement par rapport au moule de surmoulage 112. Ici, l'insert 116 comprend deux tubes 118 et 120. L'insert 116 peut comprendre du métal et/ou un matériau composite.

Selon des variantes de ce mode de réalisation, l'ensemble 100 comprend plusieurs moyens de préhension capables de porter simultanément un groupe de pièces formant un insert.

On a représenté à la figure 2 en détail le système 114 pour contrôler la structure de l'insert 116 illustré sur la figure 1.

Le système 114 pour contrôler la structure de l'insert comprend des moyens de détection d'ondes acoustiques 115. Comme illustré, ces moyens comprennent un support 117, portant chacun un capteur acoustique 119. Avantageusement, il s'agit d'un capteur électro-acoustique 119.

Ainsi, les supports 117 et les capteurs acoustiques 119 forment un moyen de détection d'ondes acoustiques 115, appartenant au système 114 pour contrôler la structure de l'insert 116 selon un procédé que l'on décrira plus loin.

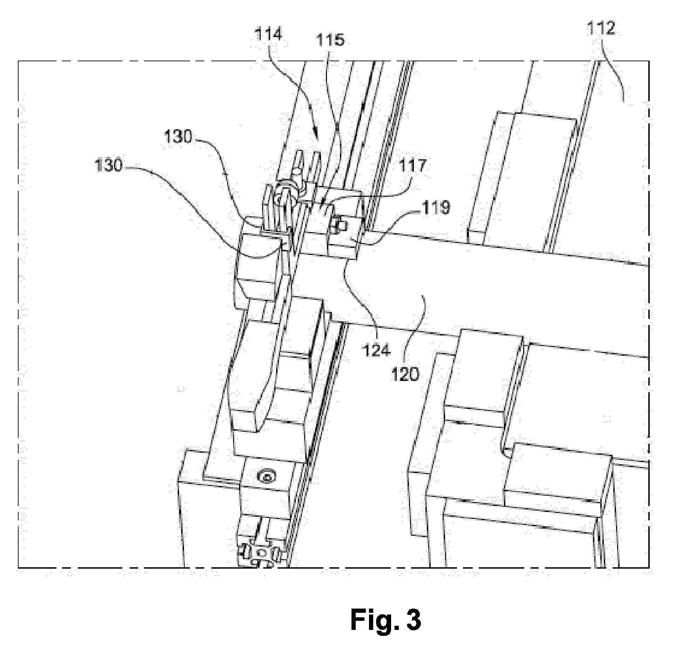

La figure 3 est un détail de la figure 2, illustrant plus précisément les moyens de détection d'ondes acoustiques 115. Comme illustré, les capteurs acoustiques 119 sont couplés à l'insert 116 par un moyen de couplage 124. Ce dernier peut être un gel, une membrane de couplage, un patin de matière souple, ou de la colle. Les moyens de couplage 124 sont ainsi positionnés entre les capteurs 119 et l'insert 116.

En outre, comme on le voit sur les figures 2 et 3, le préhenseur portant les moyens 115 est positionné en dehors du moule 112. Dans ce mode de réalisation, les moyens de couplage comportent le gel 124 qui est disposé entre une face extérieure de chaque capteur 119 en contact avec une face extérieure de l'insert 116 et cette face extérieure de l'insert 116. Dans ce mode de réalisation, l'ensemble 100 comprend un organe de maintien 130, ici une pince de maintien de l'insert 116, plaquant le capteur 119 sur l'insert 116.

En outre, l'ensemble 100 comprend avantageusement un ordinateur, non représenté sur les figures. L'ordinateur comprend un logiciel apte à analyser des ondes acoustiques émises par l'insert 116 et à corréler ces ondes à au moins une donnée relative à la structure mécanique de l'insert 116. Cette donnée peut être par exemple relative à une déformation interne ou surfacique, élastique ou plastique de l'insert 116.

L'ordinateur, les capteurs 119, les moyens de couplage 124 et le logiciel forment ainsi des moyens d'analyse des ondes acoustiques émises par l'insert, les moyens étant aptes à relier les ondes acoustiques à au moins une donnée relative à la structure mécanique de l'insert 116.

Les ondes acoustiques émises par l'insert 116 peuvent être corrélées de préférence à des phénomènes irréversibles d'endommagement tels qu'une rupture de fibre de renfort, une fissuration de la matrice si l'insert 116 comprend un matériau composite, une décohésion de matière à l'interface de l'insert 116. Ces ondes peuvent aussi être corrélées à des déformations non irréversibles comme une dilatation temporaire, disparaissant partiellement ou complètement après refroidissement de la pièce.

On décrit maintenant un procédé de surmoulage de l'insert 116 au moyen de l'ensemble 100. Ces étapes peuvent être accomplies dans un ordre choisi par un opérateur.

On ouvre le moule 112 et on saisit l'insert 116 au moyen du préhenseur afin de le positionner au sein du moule 112 ouvert.

On ferme le moule 112.

On positionne les capteurs 119 par rapport à l'insert 116 au moyen d'une couche de gel de couplage 124 disposée entre chaque capteur 119 et l'insert 116. Cette étape permet de coupler chaque capteur 119 à l'insert 116 afin de pourvoir capter les données acoustiques émises par l'insert 116.

On commence l'acquisition de données relatives aux ondes acoustiques émises et/ou transmises par l'insert 116.

On referme le moule 112.

On introduit dans le moule une matière de surmoulage.

On analyse les ondes grâce à des moyens d'analyse aptes à corréler les ondes acoustiques à au moins une donnée relative à la structure mécanique de l'insert 116.

Comme le préhenseur est positionné en dehors du moule 112, il est possible d'acquérir les données acoustiques produites par l'insert 116 durant le surmoulage. Cela est possible du fait que l'insert 116 n'est pas entièrement positionné dans le moule 112. L'insert 116 peut en effet être plus grand que le moule 112 et donc avoir des parties qui dépassent du moule 112. Ou alors, on peut positionner l'insert 116 au sein du moule 112 de façon qu'une partie de l'insert 116 s'étende en dehors du moule 112.

On contrôle ainsi la structure mécanique de l'insert 116 car toute déformation élastique ou plastique de l'insert 116 produit des ondes sonores qu'au moins un capteur 119 détecte.

L'utilisation, selon un mode de réalisation préféré, de plusieurs capteurs permet non seulement de détecter une déformation mécanique de l'insert 116 mais également sa localisation au sein de l'insert 116, en mesurant l'intensité des ondes sonores relatives à cette déformation détectée par chaque capteur 119, ainsi que le déphasage.

Dans le cas où l'insert 116 ne comprend qu'une pièce, on peut déterminer la localisation de la déformation mécanique en utilisant deux capteurs 119.

Dans ce mode de réalisation, on acquiert des données acoustiques durant tout le procédé de surmoulage. Selon une variante du présent mode de réalisation, on acquiert des données acoustiques uniquement pendant que le moule 112 est fermé.

Si l'on détecte un bruit caractéristique de l'insert 116 telle que ce dernier ne pourra être utilisé par la suite, on arrête le procédé de surmoulage, on ouvre le moule 112 et on extrait l'insert 116 endommagé qu'on remplace par un nouvel insert 116. On peut donc détecter que l'insert 116 n'est pas structurellement détérioré et totalement inapte à son utilisation ou seulement fragilisé, c'est-à-dire avec des défauts mineurs restant compatibles avec son utilisation. On peut aussi détecter un éventuel défaut à l'interface entre l'insert 116 et la matière surmoulée.

Ainsi, le procédé de surmoulage selon l'invention, notamment dans le cadre d'une production en grande série est moins couteux et permet également de gagner du temps car dès que l'on détecte l'endommagement de l'insert 116, ce dernier est remplacé.

Afin de déterminer un bruit généré par l'insert 116 caractéristique d'une déformation nécessitant un remplacement de l'insert 116, on peut, préalablement au surmoulage, effectuer une acquisition de données acoustiques permettant de déterminer un seuil de bruit caractéristique. Par la suite, un endommagement de l'insert 116 sera détecté si le bruit qu'il génère dépasse ce seuil.

On peut par exemple se référer au bruit enregistré lors du procédé de surmoulage d'un insert 116 dont on sait que l'insert 116 n'a pas été déformé.

On peut également établir une moyenne suite à l'enregistrement de bruits générés lors d'un grand nombre de mise en oeuvre du procédé de surmoulage.

On peut également utiliser tout type de traitement statistique, on peut notamment établir des niveaux de seuil reliés à un état structurel de l'insert 116, on peut également déterminer des fréquences d'endommagement lors de la production en série.

Bien entendu, on pourra apporter à l'invention de nombreuses modifications sans sortir du cadre de celle-ci.

On pourra notamment utiliser tout moyen de détection d'ondes acoustiques.

On pourra également positionner les moyens 115 de détection d'ondes acoustiques ailleurs que sur le préhenseur, le moule ou un cadre dédié. Par exemple, les moyens 115 pourront être positionnés sur des robots.

En outre, pour déterminer les seuils de comparaison acoustique, on pourra par exemple imposer des contraintes à une pièce caractérisée comme conforme jusqu'à ce que l'on génère un endommagement mécanique. Par détection du bruit émis lors de l'apparition de l'endommagement, on peut définir un seuil de comparaison acoustique.

## Revendications

1. Ensemble (100) comprenant un moule (112) de surmoulage et un système (114) pour contrôler la structure d'un insert (116) lors d'une opération de surmoulage de l'insert (116), **caractérisé en ce que** le système (114) comporte au moins un moyen de détection d'ondes acoustiques (115) émises par l'insert (116) et un moyen de couplage (124) entre le moyen de détection (115) et l'insert (116), le système (114) étant positionné à l'extérieur du moule (112).

2. Ensemble (100) selon la revendication précédente, dans lequel le système (114) comprend au moins deux moyens de détection d'ondes acoustiques (115).

3. Ensemble (100) selon l'une quelconque des revendications précédentes, dans lequel le moyen de détection d'ondes acoustiques (115) est un capteur électro-acoustique (119).

4. Ensemble (100) selon l'une quelconque des revendications précédentes, dans lequel le moyen de couplage (124) comprend seul ou en combinaison au moins une membrane, ou un gel (124), ou une couche de colle.

5. Ensemble (100) selon l'une quelconque des revendications précédentes, comprenant des moyens de filtrage et d'analyse des ondes acoustiques émises par l'insert (116), les moyens étant aptes à relier les ondes acoustiques à au moins une donnée relative à la structure mécanique de l'insert (116).

6. Ensemble (100) selon l'une quelconque des revendications précédentes, dans lequel le système (114) est porté par un moyen de préhension de l'insert (116).

7. Procédé de surmoulage d'un insert (116), **caractérisé en ce qu'**il est mis en oeuvre au moyen d'un ensemble (100) selon l'une quelconque des revendications précédentes.

8. Procédé selon la revendication précédente, comportant au moins une étape de contrôle de la structure de l'insert (116) au moyen du système (114) pour contrôler la structure d'un insert (116) de l'ensemble (100).

9. Procédé selon l'une quelconque des revendications 7 ou 8, dans lequel on acquiert des données acoustiques pendant la fermeture du moule (112).

10. Procédé selon l'une quelconque des revendications 7 à 9, dans lequel on acquiert des données acoustiques pendant toute la durée du procédé de surmoulage.

11. Procédé selon l'une quelconque des revendications 7 à 10, dans lequel on arrête le procédé de surmoulage si l'on détecte un endommagement de l'insert (116).

12. Procédé selon l'une quelconque des revendications 7 à 11, dans lequel préalablement au surmoulage, on effectue au moins une acquisition de données acoustiques afin de déterminer un seuil de bruit, un endommagement de l'insert (116) étant repéré lors du surmoulage si un bruit d'intensité supérieure au seuil prédéterminé est détecté.
